# EUROPÄISCHE PATENTANMELDUNG

(11) **EP 3 952 085 A1**
(43) Veröffentlichungstag der Anmeldung: **09.02.2022**
(21) Anmeldenummer: 20189369.0
(22) Anmeldetag: 04.08.2020
(51) Int. Cl.: H02M 1/12

(54) **STROMRICHTER MIT GLEICHTAKTFILTER**

(71) Anmelder: Siemens Aktiengesellschaft, 80333 München (DE)
(72) Erfinder: Krupp, Henrik, 91056 Erlangen (DE); Kopf, Michael, 90537 Feucht (DE); Steinmüller, Stefan, 91052 Erlangen (DE)

(57) **Zusammenfassung**

Ein Stromrichter umfasst einen Gleichtaktfilter mit einem Gleichtakttransformator, an dessen Sekundärseite eine passive frequenzselektive Schaltung angeordnet ist, die für einen oder mehrere Frequenzbereiche ein dämpfendes Verhalten zeigt und für Frequenzen außerhalb der Frequenzbereiche.

## Beschreibung

Die Erfindung betrifft einen Stromrichter mit einer Wandler-Einrichtung zur Wandlung zwischen einer ersten und einer zweiten elektrischen Spannung und mit einer Gleichtaktfilter-Vorrichtung.

Stromrichter werden in industriellen Anwendungen überwiegend als aktive Gleichrichter eingesetzt, die aus der Wechselspannung eines angeschlossenen Versorgungsnetzes eine Gleichspannung erzeugen oder als Wechselrichter eingesetzt, die aus einer Gleichspannung in das Versorgungsnetz einspeisen, beispielsweise in der Anwendung bei Solaranlagen oder Batteriespeichern. Die folgende Beschreibung orientiert sich für die begriffliche Klarheit an dem beispielhaften Fall eines Gleichrichters mit einem Leistungsfluss vom Versorgungsnetz zu gleichspannungsseitigen Verbrauchern, gilt jedoch genauso für einen Wechselrichter mit einem umgekehrten Leistungsfluss und für bidirektionale Stromrichter.

Stromrichter, insbesondere solche für industrielle Anwendungen, müssen mit Netzfiltern ausgestattet sein, um leitungsgebundene Störungen innerhalb der jeweils geltenden Normgrenzen einzuhalten. Neben dem Netzfilter besitzen einige Stromrichter zusätzlich einen Filter an der Gleichspannungsseite, der Störanteile von den externen Komponenten an der Gleichspannungsseite abschwächen soll.

Die Störungen werden unterschieden in Gegentakt-Störungen (engl. differential mode, DM) und Gleichtakt-Störungen (engl. common mode, CM). Die Unterdrückung von Gleichtakt-Störungen stellt dabei häufig eine besondere Herausforderung dar. Die an der Gleichspannungsseite angeschlossenen Verbraucher haben einen großen Einfluss auf das Gleichtakt-Störverhalten des Stromrichters und müssen damit bei der Auslegung der Filter berücksichtigt werden. Die Art, Anzahl und die elektrischen Eigenschaften der Verbraucher sind in den meisten Fällen jedoch unbekannt und können in jeder Applikation unterschiedlich sein. Hinzu kommt, dass die Verbraucher über Leitungen unbekannter Länge an den Stromrichter angeschlossen sind. Die möglichen Leitungslängen reichen dabei von etwa einem Meter bis zu mehreren hundert Metern.

Durch parasitäre Induktivitäten wie diejenigen der Leitungen und parasitäre Kapazitäten, beispielsweise der Verbraucher und auch des Stromrichters selbst kann sich dabei ein hinsichtlich Gleichtakt-Störungen elektrisch schwingfähiges System ausbilden, das im Folgenden als Gleichtaktschwingkreis bezeichnet wird. Auch die Filterkomponenten sind Teil dieses Systems. Der Gleichtaktschwingkreis kann eine Vielzahl unterschiedlicher Resonanzfrequenzen aufweisen. Jede dieser Resonanzfrequenzen kann von jeder Störquelle in dem Verbund aus Stromrichter und Verbrauchern angeregt werden. Anregende Störanteile werden erheblich verstärkt, wenn keine ausreichende Dämpfung vorliegt. Unter Dämpfung wird verstanden, dass ein Störanteil zumindest teilweise in Wärme umgesetzt wird, analog zu einem ohmschen Widerstand, der bei der Frequenz des Störanteils wirksam ist.

Der Netzfilter des Stromrichters muss dabei nicht nur die Störungen des Stromrichters selbst hinreichend unterdrücken, sondern auch alle durch den Verbund erzeugten Störanteile, auch die durch den Gleichtaktschwingkreis bedingt sind.

Es ist bekannt, zusätzliche Filterstufen zu verwenden, um zu verhindern, dass Schwingungen bei Resonanzfrequenzen angeregt werden. Nachteilig an dieser Lösung ist, dass jede weitere Filterstufe neben zusätzlichen Kosten, Bauvolumen und ungewollten Gegentakt-Verlusten auch weitere Resonanzstellen des Gleichtaktschwingkreises erzeugt.

Es ist weiterhin bekannt, mit EMV-Ferriten als Gleichtakt-Filterbauelementen die Gleichtakt-Störungen zu verringern. Bei Anlagen im industriellen Maßstab ist es aber möglich, dass Resonanzfrequenzen des Gleichtaktschwingkreises deutlich unter 1 MHz liegen. In diesem Frequenzbereich bewirken Filterbauelemente wie beispielsweise EMV-Ferrite oft keine ausreichende Dämpfung, sondern wirken nahezu rein induktiv. Dasselbe gilt typischerweise für zusätzliche Filterstufen, die bei solchen Frequenzen häufig nur ein System aus Blindwiderständen darstellen, die oft ebenso eine Verschiebung der Resonanzstellen bewirken oder verhindern sollen, dass die verstärkten Störanteile sich bis zur Netzseite ausbreiten. Es wird dadurch aber nicht verhindert, dass unzureichend gedämpfte Resonanzstelle vorhanden ist.

Es ist Aufgabe der vorliegenden Erfindung, einen Stromrichter anzugeben, bei dem die eingangs genannten Nachteile vermindert sind. Diese Aufgabe wird durch einen Stromrichter mit den Merkmalen von Anspruch 1 gelöst.

Der erfindungsgemäße Stromrichter umfasst eine Wandler-Einrichtung zur Wandlung zwischen einer ersten und einer zweiten elektrischen Spannung. Bei der Wandler-Einrichtung kann es sich beispielsweise um eine oder mehrere parallel geschaltete Halbbrücken mit jeweils zwei oder mehr Leistungshalbleitern handeln, die durch eine geeignete Steuerung beispielsweise mittels Pulsweitenmodulation die Wandlung der Spannungen vornehmen.

Der erfindungsgemäße Stromrichter umfasst weiterhin eine Gleichtaktfilter-Vorrichtung. Die Gleichtaktfilter-Vorrichtung weist einen Gleichtakt-Transformator auf, wobei der Gleichtakt-Transformator wenigstens zwei gleichsinnig auf einem gemeinsamen Kern angeordnete erste Wicklungen aufweist, die seriell in mit der Wandler-Einrichtung verbundene elektrische Leiter geschaltet sind. Ferner ist eine zweite Wicklung auf dem gemeinsamen Kern angeordnet. Die zweite Wicklung ist mit einer frequenzselektiven passiven Dämpfungsschaltung verbunden.

Für die Erfindung wurde erkannt, dass eine mittels eines Transformators angekoppelte Dämpfungsschaltung geeignet ist, eine oder mehrere der auftretenden Resonanzstellen des Gleichtaktschwingkreises mit einer ausreichenden Dämpfung zu versehen. Unter Dämpfungsschaltung wird dabei eine Schaltung verstanden, die eine Dämpfung analog zu einem im Strompfad liegenden Widerstand erzeugt, d.h. eine Schaltung, die fließendem Strom und insbesondere einer Schwingung Energie entzieht, beispielsweise durch eine Wandlung in Wärme, wie sie ein Widerstand vollzieht.

Die Dämpfungsschaltung kann dazu im einfachsten Fall einen Widerstand aufweisen. Der Widerstand kann zwingend im Strompfad liegen, wenn beispielsweise die gesamte Dämpfungsschaltung eine Serienschaltung mit einem Widerstand ist. Der Widerstand kann aber auch frequenzselektiv teilweise überbrückt oder gekoppelt werden, wenn der Widerstand beispielsweise parallel zu einem Kondensator und parallel zu einer Induktivität geschaltet ist und/oder der Widerstandes mit einem Kondensator und/oder einer Induktivität in Serie geschaltet ist.

Unter frequenzselektiv wird dabei verstanden, dass die Dämpfungsschaltung ein frequenzabhängiges Verhalten zeigt, beispielsweise einen Hochpass, Tiefpass, Bandpass oder eine Bandsperre umfasst. Dadurch wird vorteilhaft bewirkt, dass die Dämpfung nicht gleichmäßig auf alle Frequenzen wirkt, sondern für einen Teil des Spektrums nur abgeschwächt auftritt, also einen Teil des Spektrums nur geringfügig oder sehr geringfügig beeinflusst. Dadurch werden negative Auswirkungen wie unerwünschte zusätzliche Verluste vermieden.

Weiterhin ist vorteilhaft, dass durch die Anordnung der Dämpfungsschaltung in der Sekundärseite des Gleichtakttransformators auch nur Gleichtaktanteile die Dämpfungsschaltung erreichen, während Gegentaktanteile nicht in die Dämpfungsschaltung übertragen werden. Dadurch werden Verluste durch die ungewollte Dämpfung von Gegentaktanteilen vermieden.

Vorteilhafte Ausgestaltungen der erfindungsgemäßen Vorrichtung und des erfindungsgemäßen Verfahrens gehen aus den abhängigen Ansprüchen hervor. Dabei können die Ausführungsformen der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen sein:
Die frequenzselektive passive Dämpfungsschaltung kann wenigstens einen Kondensator und/oder wenigstens eine Induktivität aufweisen. Diese Bauelemente stellen vorteilhaft in einfacher Weise und passiv die Frequenzselektivität bereit. Aus Parallel- und/oder Serienschaltungen von Kondensator und/oder Induktivität ergeben sich die genannten Hochpass-, Tiefpass- oder anderen frequenzselektiven Schaltungen.

Unter passiv wird dabei verstanden, dass die in der Dämpfungsschaltung verwendeten Elemente keinerlei Steuerung benötigen. Leistungshalbleiter wie IGBTs, Feldeffekt- oder Bipolar-Transistoren werden im Allgemeinen als nicht-passive Bauelemente angesehen, da sie für ihre Funktion meistens eine Ansteuerung ihres Steuerkontakts, also der Gate-Elektrode benötigen. Der Aufwand für die Verwendung von solchen aktiven Bauelementen ist wesentlich höher als der für die Verwendung von rein passiven Bauelementen.

Die Gleichtaktfilter-Vorrichtung kann eine zusätzliche Gleichtaktdrossel aufweisen. Mit anderen Worten umfasst die Gleichtaktfilter-Vorrichtung den Gleichtakt-Transformator und zusätzlich eine weitere Gleichtaktdrossel, die ihrerseits drei gleichsinnig auf einem magnetischen Kern angeordnete Wicklungen umfasst. Dadurch kann die Induktivität der Gleichtaktdrossel unabhängig vom Gleichtakt-Transformator eingestellt werden. Die Gleichtaktfilter-Vorrichtung kann in diesem Fall von den elektrischen Leitungen zu einem Bezugspotential geschaltete Kondensatoren aufweisen. Diese bilden zusammen mit der Gleichtaktdrossel und dem Gleichtakt-Transformator einen LCL-Filter.

Der gemeinsame Kern kann so gestaltet sein, dass seine Streuinduktivität absichtlich erhöht ist. Dafür gibt es viele Möglichkeiten. Beispielsweise kann ein rechteckig oder quadratisch aufgebauter Kern einen Mittelsteg mit einem Luftspalt aufweisen. Auf diese Weise kann die Funktion einer sonst separat vorliegenden Gleichtaktdrossel und die Funktion des Gleichtakttransformators in einem einzige Bauteil vereint werden. Dadurch können für den Stromrichter Platz und Gewicht gespart werden, da gerade die induktiven Bauelemente bei Stromrichtern häufig groß und schwer im Vergleich zu anderen Bauelementen wie Leistungshalbleitern sind.

Die frequenzselektive passive Dämpfungsschaltung kann eine Serienschaltung mit einem Widerstand und einem Kondensator oder einem Widerstand und einer Induktivität oder einem Widerstand, einer Induktivität und einem Kondensator aufweisen. Die Dämpfungsschaltung kann auch nur genau diese Elemente aufweisen, also mit anderen Worten keine weiteren elektrischen Bauteile mehr zusätzlich aufweisen.

Die frequenzselektive passive Dämpfungsschaltung kann eine Parallelschaltung eines Widerstands, eines Kondensator und einer Induktivität aufweisen oder aus dieser bestehen.

Die frequenzselektive passive Dämpfungsschaltung kann ferner eine Serienschaltung mit einem Widerstand und einer Parallelschaltung eines Kondensators mit einem Widerstand aufweisen. Zusätzlich dazu kann die Dämpfungsschaltung einen in Serie geschalteten Kondensator aufweist.

Es versteht sich dabei, dass auch komplexere Schaltungen mit mehr Elementen als den beschriebenen aufgebaut werden können, die jedoch häufig in der Funktion einfacheren Aufbauten entsprechen und durch Schaltungsanalyse auf diese zurückgeführt werden können.

Durch die verschiedenen Schaltungstypen werden frequenzselektiv, d.h. in Abhängigkeit von einer betrachteten Frequenz drei verschiedene Verhaltenstypen geschaffen, mit denen die Dämpfungsschaltung in verschiedener Weise wirkt. Dabei sind die Wirkungsbereiche nicht scharf abgegrenzt, sondern gehen ineinander über, wie für Hochpass, Tiefpass und andere solche Schaltungen bekannt. Weiterhin sind die Verhaltenstypen auch nicht absolut, sondern es liegt stets eine Mischung vor, die aber in bestimmten Frequenz-Bereichen von einem der Verhaltenstypen dominiert wird.

Bei dem ersten Verhaltenstyp wirkt die Dämpfungsschaltung so, dass der Stromfluss weitgehend blockiert wird. Dies passiert beispielsweise bei einer Serienschaltung eines Widerstands mit einem Kondensator bei niedrigen Frequenzen. In diesem Fall ist die zweite Wicklung, die die Sekundärseite des Gleichtakttransformators bildet, offen. Ein Stromfluss ist damit für die zweite Wicklung weitgehend unterbunden, wodurch der Gleichtakttransformator weitgehend wie eine einfachere Gleichtaktdrossel wirkt.

Bei dem zweiten Verhaltenstyp wirkt die Dämpfungsschaltung so, dass ihre Enden weitgehend kurzgeschlossen sind. Dies passiert beispielsweise bei einer Parallelschaltung eines Widerstands mit einem Kondensator und einer Induktivität bei niedrigen und bei hohen Frequenzen, also bei allen Frequenzen, die nicht in der Nähe der sich für diesen Schwingkreis ergebenden Resonanzfrequenz liegen. In diesem Fall ist die zweite Wicklung also praktisch kurzgeschlossen und der Gleichtakttransformator hat eine Induktivität, die sich aus den vorhandenen ersten Wicklungen und der zweiten Wicklung ergibt, also gegenüber dem ersten Verhaltenstyp verändert ist.

Bei dem dritten Verhaltenstyp wirkt die Dämpfungsschaltung in erheblicher Weise ohmsch. In diesem Fall weist der Hauptstrompfad durch die Schaltung typischerweise einen in Serie liegenden Widerstand auf. Dies passiert beispielsweise bei einer Parallelschaltung eines Widerstands mit einem Kondensator bei niedrigen Frequenzen, bei denen der Kondensator den Stromfluss nahezu völlig blockiert und somit den Widerstand nicht überbrückt. In diesem Fall ist die zweite Wicklung durch eine zumindest anteilig ohmsch wirkende Schaltung geschlossen und entfaltet eine Dämpfung gegenüber allen Stromanteilen bei niedrigen Frequenzen.

Mit den beschriebenen Dämpfungsschaltungen und anderen analog wirkenden Dämpfungsschaltungen lassen sich somit frequenzselektiv Anteile des Stroms dämpfen, insbesondere Stromanteile bei Frequenzen, die zu Gleichtaktschwingkreisen gehören. Dabei ist es besonders vorteilhaft, wenn die Dämpfungsschaltung so gestaltet wird, dass nicht zu dämpfende Stromanteile, also solche, die nicht zu Gleichtaktschwingkreisen gehören, möglichst wenig beeinflusst werden.

Besonders vorteilhaft ist es, wenn die frequenzselektive passive Dämpfungsschaltung eine erste frequenzselektive Teilschaltung mit einer ersten Grenzfrequenz oder Resonanzfrequenz und eine parallel zur ersten Teilschaltung geschaltete zweite frequenzselektive Teilschaltung mit einer zweiten, von der ersten verschiedenen Grenzfrequenz oder Resonanzfrequenz umfasst. So können gezielt verschiedene Resonanzfrequenzen, die im Verbund von Stromrichter und Last auftreten, mit einer Dämpfung versehen werden. Andere Frequenzen sind von der Dämpfung nur wenig betroffen.

Die Gleichtaktfilter-Vorrichtung ist bevorzugt netzseitig von der Wandler-Einrichtung angeordnet, kann aber auch lastseitig davon angeordnet sein, beispielsweise als Teil eines DC-Filters. Der gemeinsame Kern kann ein ringförmiger Kern sein oder ein quadratisch oder rechteckig gestalteter Kern sein.

Im Folgenden wird die Erfindung anhand der Figuren der Zeichnung im Zusammenhang mit einem Ausführungsbeispiel näher beschrieben und erläutert. Dabei zeigen
Figur 1 ein Schaltbild eines Systems mit einem als Gleichrichter eingesetzten Stromrichter mit einem Netzfilter,
Figur 2 das Netzfilter mit einer Dämpfungsschaltung,
Figuren 3 bis 7 elektrische Schaltbilder für Ausführungen der Dämpfungsschaltung,
Figur 8 ein Aufbau eines Gleichtakttransformators,
Figur 9 ein weiterer Aufbau eines Gleichtakttransformators,
Figur 10 eine Ausführung des Netzfilters an einem einphasigen Anschluss,
Figur 11 eine Ausführung des Netzfilters an einem dreiphasigen Anschluss mit Nullleiter,
Figur 12 ein Aufbau des Netzfilters mit einem LCL-Filter,
Figur 13 ein beispielhaftes System mit Netzfilter.

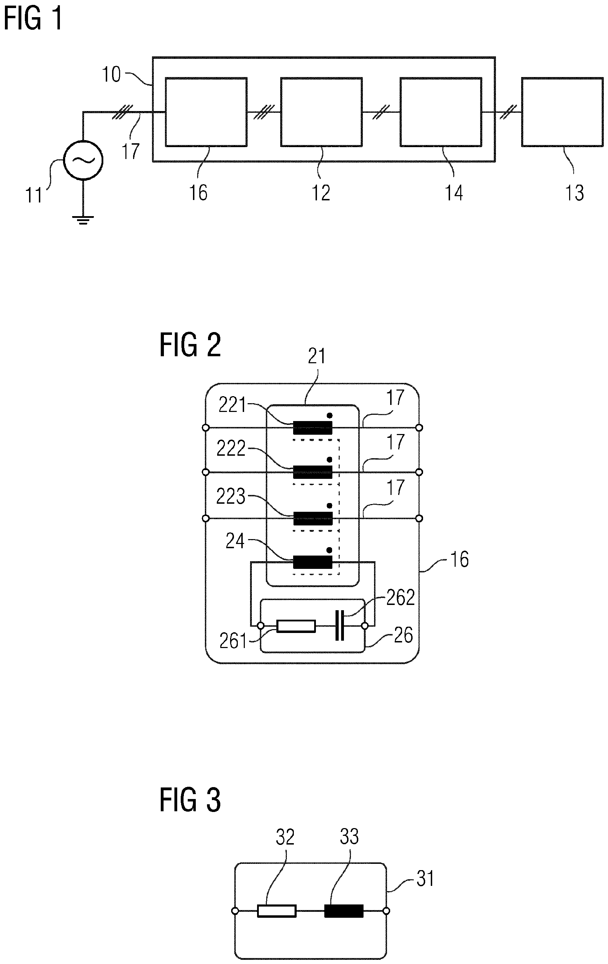

Das schematische und vereinfachte Schaltbild der Figur 1 veranschaulicht den Aufbau eines Systems mit einem Stromrichter 10, der ein Ausführungsbeispiel für die Erfindung ist.

Der Stromrichter 10 ist eingangsseitig mit einem dreiphasigen Versorgungsnetz 11 verbunden. Ausgangsseitig ist der Stromrichter 10 mit einer Last 13 verbunden, die beispielsweise Teil einer industriellen Prozesseinrichtung sein kann wie eine Beheizung oder eine Elektrolyse-Anlage. Natürlich ist es möglich, dass die nur angedeutete Last 13 selbst ein ganzes Netzwerk weiterer Anordnungen ist. Die Bezeichnungen eingangsseitig und ausgangsseitig werden auch nur der Einfachheit halber verwendet. Der Leistungsfluss kann in Anwendungen umgekehrt oder sogar bidirektional sein, sodass die Unterscheidung in Eingangsseite und Ausgangsseite des Stromrichters 10 gar nicht getroffen werden kann.

Der Stromrichter 10 wird in diesem System als aktiver Gleichrichter verwendet und ist als solcher ausgestaltet, speziell die Wandler-Einrichtung 12, die die eigentliche Umsetzung der eingangsseitigen dreiphasigen Versorgungsspannung in eine einphasige Gleichspannung vornimmt. Auf der DC-Seite weist der Stromrichter 10 einen DC-Filter 14 auf, der die Ausbreitung von Störungen, die von der Last 13 erzeugt werden, zum Versorgungsnetz 11 unterbinden soll.

Weiterhin umfasst der Stromrichter 10 einen Netzfilter 16. Der Netzfilter 16 dient dazu, leitungsgebundene Störungen in den Grenzen zu halten, die durch Normen vorgegeben werden. Für den Netzfilter 16 können verschiedene Ausgestaltungen verwendet werden, aus denen sich mehrere Ausführungsbeispiele für die Erfindung ergeben. Eine Auswahl solcher Ausgestaltungen ist in den Figuren 2, 10 und 11 dargestellt. Der Netzfilter 16 ist dabei an oder in die Phasenleitungen 17 geschaltet, die die Verbindung zwischen dem Versorgungsnetz 11 und dem Stromrichter 10 herstellen.

Dabei ist zu beachten, dass durch parasitäre Induktivitäten wie beispielsweise der zur Last 13 führenden Leitungen und parasitäre Kapazitäten, beispielsweise der Last 13, aber auch des Stromrichters 10 selbst und sogar der Komponenten der Filter 14, 16 hinsichtlich Gleichtaktstörungen ein elektrisch schwingfähiges System entsteht, das im Folgenden "Gleichtaktschwingkreis" genannt wird. Der Gleichtaktschwingkreis kann eine Vielzahl unterschiedlicher Resonanzstellen aufweisen. Jede dieser Resonanzstellen kann von jeder Störquelle in dem Verbund von Stromrichter 10 und Last 13 angeregt werden. Ist das der Fall, wird der anregende Störanteil erheblich verstärkt, wenn keine ausreichende Dämpfung vorliegt. Der Netzfilter 16 des Stromrichters 10 muss nicht nur die Störungen des Stromrichters 10 selbst hinreichend unterdrücken, sondern auch alle durch den Verbund erzeugten Störanteile, insbesondere diejenigen, die durch den Gleichtaktschwingkreis entstehen.

Die konkret auftretenden Gleichtaktschwingkreise und ihre Resonanzstellen sind abhängig vom konkreten Aufbau des Verbunds aus Stromrichter 10 und Last 13. Eine Vorhersage ohne die Eigenschaften der Last 13 sind daher nicht ausreichend. Vielmehr müssen die Resonanzstellen bei genauer Kenntnis des konkreten Aufbaus durch Simulation oder alternativ per Messung erfasst werden.

Figur 2 zeigt ein elektrisches Schaltbild für eine erste Ausgestaltung für den Netzfilter 16, der das in vorteilhafter Weise kann. Der Netzfilter 16 umfasst einen Gleichtakttransformator 21. Der Gleichtakttransformator 21 umfasst drei auf einem gemeinsamen Kern 81 angeordnete und gleichsinnig in jeweils eine der Phasenleitungen 17 geschaltete erste Wicklungen 221, 222, 223. Auf dem gemeinsamen Kern 81 ist weiterhin eine zweite Wicklung 24 angeordnet.

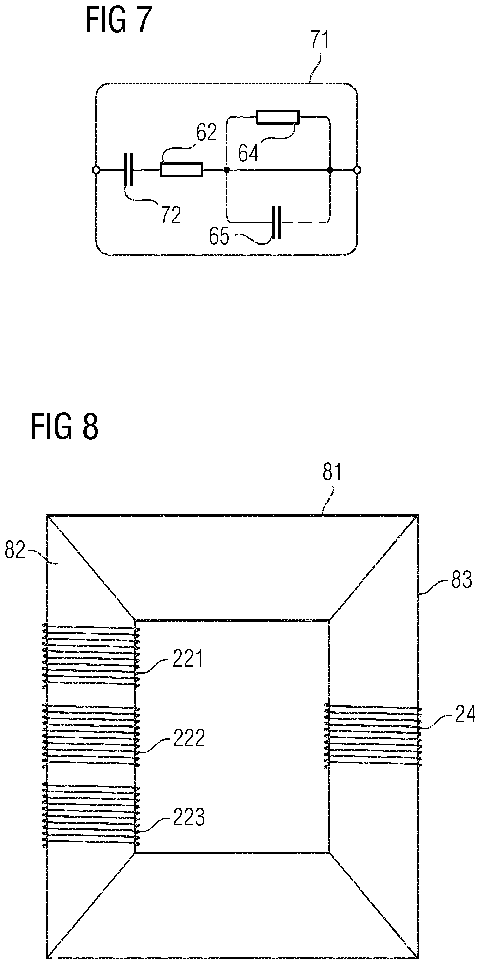

Eine mögliche Anordnung der Wicklungen 221...223, 24 ist in Figur 8 dargestellt. Figur 8 zeigt den gemeinsamen Kern 81, der in diesem Beispiel im Wesentlichen quadratisch ist und analog zu einem aus zwei U-Kernen zusammengesetzten Kern aufgebaut ist. Der gemeinsame Kern 81 ist dabei luftspaltfrei. Auf einem ersten Schenkel 82 des gemeinsamen Kerns 81 sind die ersten Wicklungen 221...223 in gleichsinniger Windungsrichtung angeordnet, während die zweite Wicklung 24, also die Sekundärseite des Gleichtakttransformators 21 auf einem zweiten Schenkel 83 des gemeinsamen Kerns 81 angeordnet ist. Die Windungsrichtung der zweiten Wicklung 24 ist dabei beliebig.

Die zweite Wicklung 24 ist angeschlossen an eine erste Variante einer passiven und frequenzselektiven Dämpfungsschaltung 26, die eine Serienschaltung eines Widerstands 261 und eines Kondensators 262 umfasst. Diese Serienschaltung wirkt als Hochpass. Die Komponenten sind in diesem Beispiel so gewählt, dass die Dämpfungsschaltung 26 bei Frequenzen von weniger als 100 kHz nahezu wie ein geöffneter Stromkreis wirkt. Die Anschlüsse der zweiten Wicklung 24 sind dadurch im Wesentlichen offen und die zweite Wicklung 24 entfaltet im Gleichtakttransformator 21 nur geringe Wirkung. Der Gleichtakttransformator 21 agiert daher in dem angegebenen Bereich niedriger Frequenzen wie eine Gleichtaktdrossel.

Bei Frequenzen deutlich oberhalb von 100 kHz entfaltet der Kondensator 262 keine blockierende Wirkung mehr und die Dämpfungsschaltung 26 zeigt ein im Wesentlichen ohmsches Verhalten. Die Grenzfrequenz von 100 kHz ist in diesem Beispiel so gewählt, dass sie gerade im Bereich eines beispielhaften Resonanzpunkts bei 121 kHz liegt. Dadurch wird die dämpfende ohmsche Wirkung der Dämpfungsschaltung 26 erst in etwa beim Resonanzpunkt tatsächlich erreicht, während bei niedrigeren Frequenzen der Einfluss der zweiten Wicklung 24 verschwindet.

Figur 3 zeigt ein weiteres Ausführungsbeispiel für eine Dämpfungsschaltung. Die passive und frequenzselektive Dämpfungsschaltung 31 ist im Netzfilter 16 an der Stelle der Dämpfungsschaltung 26 einzusetzen und ersetzt diese. Die Dämpfungsschaltung 31 umfasst eine Serienschaltung eines Widerstands 32 und einer Induktivität 33. Diese bilden zusammen einen Tiefpass.

Bei Frequenzen unterhalb der Grenzfrequenz, also insbesondere bei der Resonanzstelle, entfaltet die Dämpfungsschaltung 31 daher eine weitgehend ohmsche, also dämpfende Wirkung auf die eingekoppelten Stromanteile. Dadurch wird für den Gleichtaktschwingkreis eine geeignete Dämpfung erzielt und somit eine Verstärkung entsprechender Stromanteile unterbunden. Oberhalb der Grenzfrequenz wirkt die Induktivität 33 blockierend auf Stromanteile und der Gleichtakttransformator 21 wirkt wieder wie eine Gleichtaktdrossel ohne die zweite Wicklung 24.

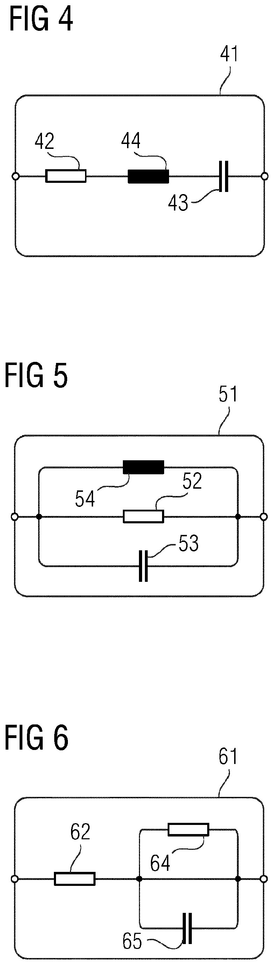

Figur 4 zeigt eine weitere Ausführungsmöglichkeit. Die passive und frequenzselektive Dämpfungsschaltung 41 der Figur 4 umfasst eine Serienschaltung eines Widerstands 42, eines Kondensators 43 und einer Induktivität 44.

Die Induktivität 44 der Dämpfungsschaltung 41 sorgt dafür, dass bei ausreichend hoher Frequenz der Stromfluss zwischen den Anschlüssen der zweiten Wicklung 24 nahezu blockiert ist, stellt also einen hohen Widerstand bei hohen Frequenzen dar. Ebenso stellt der Kondensator 43 der Dämpfungsschaltung 41 einen hohen Widerstand dar bei ausreichend niedrigen Frequenzen.

Lediglich in einem Bereich um eine Frequenz, die sich als Resonanzfrequenz des Schwingkreises aus Kondensator 43 und Induktivität 44 ergibt, ergibt sich ein geringer bis sehr geringer Widerstand dieser beiden Komponenten, sodass für den Stromfluss maßgeblich der Widerstand 42 ist, der eine Dämpfung für Schwingungen im Bereich der Resonanzfrequenz bewirkt.

Im Gegensatz zum Hochpass und Tiefpass der Figuren 2 und 3 ist also durch die Dämpfungsschaltung 41 ein Bandpass realisiert, wobei der passierte Frequenzbereich einen gedämpften Durchlass erlebt. Mit der Dämpfungsschaltung 41 können Resonanzstellen, die genau bekannt sind, mit einer passenden Dämpfung versehen werden. Bei Frequenzen außerhalb des Resonanzbereichs bewirkt die Dämpfungsschaltung 41, dass die zweite Wicklung 24 im Wesentlichen offen ist.

Figur 5 zeigt eine weitere Ausführungsmöglichkeit. Die passive und frequenzselektive Dämpfungsschaltung 51 der Figur 5 umfasst eine Parallelschaltung eines Widerstands 52, eines Kondensators 53 und einer Induktivität 54.

Die Induktivität 54 der Dämpfungsschaltung 51 sorgt dafür, dass bei ausreichend niedriger Frequenz die Anschlüsse der zweiten Wicklung 24 annähernd kurzgeschlossen sind. Dadurch wird der direkt zwischen den Anschlüssen der zweiten Wicklung 24 befindliche Widerstand 52 weitgehend überbrückt und es ergibt sich eine sehr geringe Dämpfung.

Der Kondensator 53 der Dämpfungsschaltung 51 wiederum sorgt für eine Überbrückung des Widerstands 52 bei einer ausreichend hohen Frequenz. Dadurch stellt sich auch bei hohen Frequenzen eine geringe Dämpfungswirkung der Dämpfungsschaltung 51 ein. Lediglich in einem Frequenzbereich, der durch die Wahl der Komponenten festlegbar ist, ist der Widerstand 52 das maßgebliche stromführende Element der Dämpfungsschaltung 51 und sorgt für eine Dämpfung von Stromanteilen der entsprechenden Frequenzen.

Im Gegensatz zum Hochpass und Tiefpass der Figuren 2 und 3 ist also durch die Dämpfungsschaltung 51 eine Art von Bandsperre realisiert, wobei der Frequenzbereich, der blockiert wird, durch den Widerstand 52 geleitet wird und somit ein gedämpfter Durchlass gegeben ist. Dadurch können eine Resonanzstelle oder auch mehrere nicht zu weit auseinander liegende Resonanzstellen mit einer Dämpfung versehen werden.

Bei Frequenzen außerhalb des blockierten Bandes bewirkt die Dämpfungsschaltung 51, dass die zweite Wicklung 24 im Wesentlichen kurzgeschlossen wird. Das ohmsche Verhalten des Widerstands 52 tritt dadurch für die Eigenschaften des Gleichtakttransformators 21 in den Hintergrund und die Induktivität der zweiten Wicklung 24 bleibt erhalten für die Eigenschaften des Gleichtakttransformators 21.

Eine weitere Möglichkeit der Ausgestaltung ist in Figur 6 dargestellt. Die passive und frequenzselektive Dämpfungsschaltung 61 der Figur 6 umfasst eine Serienschaltung eines ersten Widerstands 62 und einer Parallelschaltung, die einen zweiten Widerstand 64 und einen Kondensator 65 aufweist.

Da die Dämpfungsschaltung 61 bei allen Frequenzen einen ohmschen Strompfad bietet, findet eine Dämpfung auch bei allen Frequenzen statt. Durch die Parallelschaltung des Kondensators 65 zum zweiten Widerstand 64 wird der zweite Widerstand 64 bei hohen Frequenzen überbrückt und die Dämpfung passiert nur durch en ersten Widerstand 62. Letztlich ergibt sich also eine frequenzabhängige Dämpfung mit einem ersten, kleineren Widerstandswert bei hohen Frequenzen und einem größeren summierten Widerstandswert bei niedrigen Frequenzen.

Um eine Dämpfung durch die Dämpfungsschaltung 61 bei niedrigen Frequenzen zu unterbinden, kann die Dämpfungsschaltung 71 der Figur 7 verwendet werden. Diese entspricht der Dämpfungsschaltung 61 der Figur 6, ist aber um einen zweiten Kondensator 72 ergänzt, der in Serie zu den bereits vorhandenen Elementen geschaltet ist. Die sich ergebende Hochpass-Wirkung entspricht in etwa derjenigen, die für die Dämpfungsschaltung 21 der Figur 2 geschildert wurde.

Weitere Ausführungsbeispiele für die Erfindung ergeben sich durch Parallelschaltung von mehreren der beschriebenen Varianten für Dämpfungsschaltungen. Durch eine unterschiedliche Wahl von Komponenten und dadurch verschiedene Grenzfrequenzen oder Resonanzfrequenzen kann so ein Verhalten ausgebildet werden, mit dem verschiedene Gleichtaktschwingkreise selektiv gedämpft werden und gleichzeitig unerwünschte elektrische Verluste vermieden werden. Durch die Beschaltung an der zweiten Wicklung 24 im Gleichtakttransformator 21 werden automatisch nur Gleichtaktstörungen in die Dämpfungsschaltung übertragen und beeinflusst.

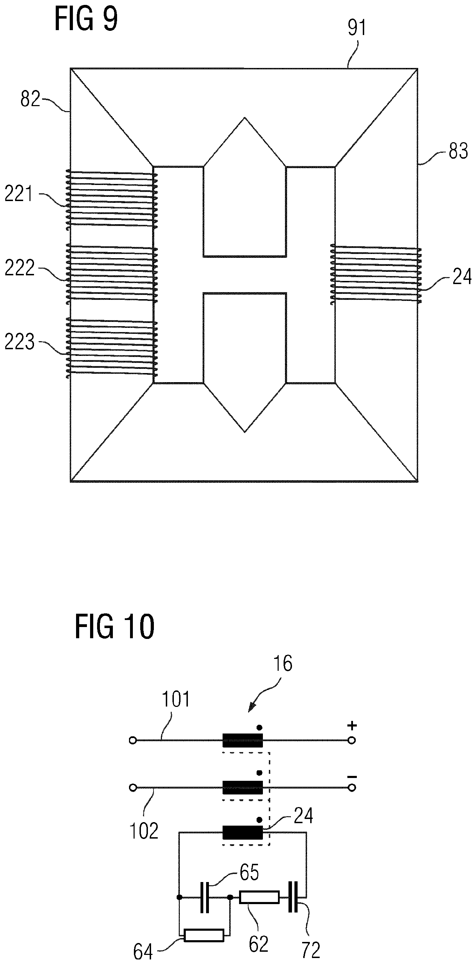

Figur 10 zeigt den Anschluss des Netzfilters 16 und speziell des Gleichtakttransformators 21 in einer einphasigen Umgebung. Dabei umfasst der Gleichtakttransformator 21 zwei erste Wicklungen, die in den positiven Pol 101 und den negativen Pol 102 des einphasigen Systems eingebracht sind. Die Dämpfungsschaltung in Figur 10 entspricht beispielhaft derjenigen der Figur 7.

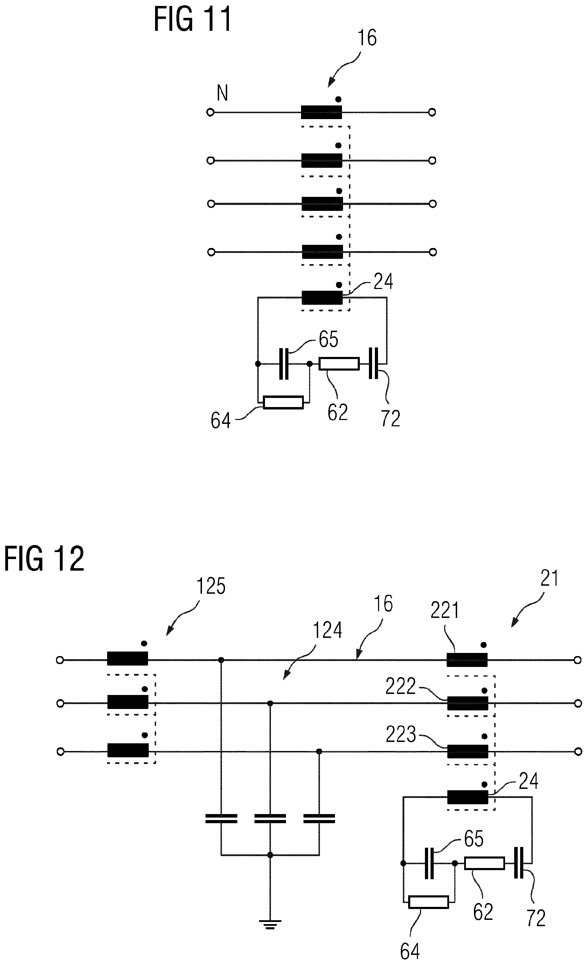

Figur 11 zeigt den Anschluss des Gleichtakttransformators 21 in einer dreiphasigen Umgebung mit Neutralleiter. Dabei umfasst der Gleichtakttransformator 21 vier erste Wicklungen, die in Phasenleitungen und den Neutralleiter eingebracht sind. Die Dämpfungsschaltung in Figur 11 entspricht beispielhaft ebenfalls derjenigen der Figur 7.

Figur 12 zeigt einen Aufbau für den Netzfilter 16 in einem dreiphasigen System, in dem ein LCL-Filter aus dem Gleichtakttransformator 21, einem Kondensator-System 124 und einer Gleichtaktdrossel 125 gebildet ist. Das LCL-Filter ist also gegenüber bekannten LCL-Filtern um die zweite Wicklung 24 und die angeschlossene Dämpfungsschaltung erweitert.

In einer vorteilhaften Ausgestaltung können die Funktionen des Gleichtakttransformators 21 und der Gleichtaktdrossel 125 in einer einzigen Baugruppe realisiert werden, sofern eine Ausgestaltung ohne ein zwischengeschaltetes Kondensator-System 124 verwendet wird. Dazu wird im Gleichtakttransformator 21 ein magnetischer Kern 91 verwendet, wie er beispielhaft in Figur 9 gezeigt ist. Der Kern 91 ist wie der gemeinsame Kern 81 quadratisch oder rechteckig aufgebaut. Im Gegensatz zum Kern 81 umfasst der Kern 91 jedoch einen zusätzlichen Schenkel in Form des Mittelstegs 92, wobei der Mittelsteg 92 einen Luftspalt aufweist und frei von Wicklungen ist. Durch den Mittelsteg 92 wird eine erhöhte Streuinduktivität gegenüber dem gemeinsamen Kern 81 erreicht. Dadurch ergibt sich in Teilen eine Wirkung analog zur Gleichtaktdrossel 125, wobei das Verhältnis der Induktivitäten durch die Gestaltung des Mittelstegs 92 einstellbar ist.

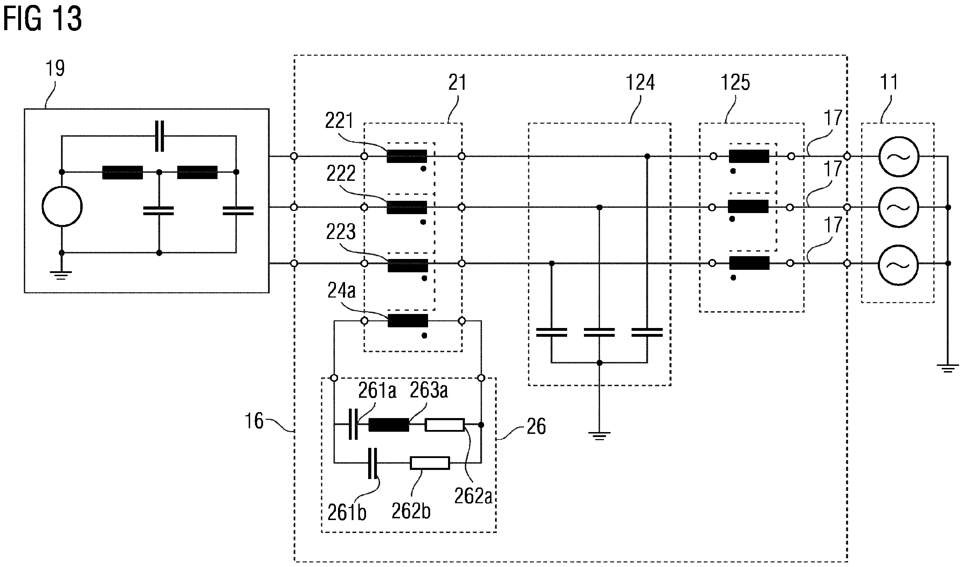

Figur 13 zeigt ein Beispielsystem. Das Netzfilter 16 ist ein Gleichtaktfilter. In realen Systemen kann das Netzfilter 16 auch noch weitere Komponenten umfassen. Der Gleichtaktfilter muss sicherstellen, dass die in das Versorgungsnetz 11 abgegebenen Störungen den Normgrenzen entsprechen. Figur 13 zeigt weiter ein Störsystem 19, dass aus (mindestens einer) Störquelle und häufig einem komplexen RLC-Netzwerk besteht, das unter anderem durch die Last 13 und dem DC-Filter 14 gebildet wird. Es ist üblich, dass die Impedanz des Störsystems 19 in dem für leitungsgebundene Störungen betrachteten Frequenzbereich zwischen 9 kHz und 40 MHz großen Schwankungen unterliegt. Es ist häufig der Fall, dass die Impedanz des Störsystems 19 in diesem Bereich zwischen kapazitiv und induktiv wechselt. Anhand Figur 13 ist erkennbar, dass die Serienschaltung des Störsystems 19, des Gleichtakttransformators 21 und der Kondensatorsystems 124 einen ersten und hier den einzigen Resonanzkreis bildet. Die Resonanzstellen dieses Resonanzkreises können mit der gezeigten Ausführung der Erfindung gedämpft werden.

Im Folgenden werden Beispielwerte angenommen: Die Wicklungen 221, 222, 223, 24 weisen eine Eigeninduktivität von 10 mH und eine nahezu ideale Kopplung zueinander auf. Die Kondensatoren 124 werden als ideal mit Werten von jeweils 10 nF angenommen. Die Gleichtaktdrossel 125 sei hier beispielhaft mit 10 mH Eigeninduktivität der Wicklungen angenommen.

Durch Simulation oder Rechnung bestimmt man nun die erste Resonanzstelle des Systems. Hier ist beispielhaft angenommen, dass sich diese bei ca. 10 kHz befindet. Diese Resonanzstelle soll gezielt mit einem Filterzweig nach Figur 4 gedämpft werden, um zu verhindern, dass diese Resonanzstelle angeregt werden kann. Die Werte der elektrischen Komponenten 261a, 262a, 263a sind so auszulegen, dass der Resonanzkreis bei ca. 10 kHz ausreichend gedämpft ist. In dem folgenden Beispiel sind für 261a ca, 60 nF, 263a ca, 5 mH und 262a ca. 100 Ohm eine mögliche Dimensionierung.

Durch Simulation oder Rechnung wird nun die nächste Resonanzstelle des Systems bestimmt. Im Bereich hoher Frequenzen kommt in der Praxis häufig vor, dass lediglich ein Bereich, in dem sich eine Resonanzstelle befinden kann, bestimmt werden kann. Dies ist insbesondere dann der Fall, wenn in dem Störungsmodell beispielsweise parasitäre Kapazitäten berücksichtigt werden, deren Werte nur ungenau bekannt sind.

Im Folgenden wird davon ausgegangen, dass das System oberhalb von 100 kHz weitere Resonanzstellen aufweist, ohne dass diese genau bestimmt werden können. In diesem Fall bietet es sich an, das Netzfilter 16 um die Glieder 261b und 262b zu erweitern. Eine mögliche Dimensionierung stellen 261b ca. 2 nF und 262 ca. 1 kOhm dar.

In der beispielhaften Auslegung ist die Dämpfung insbesondere im Bereich der ersten Resonanzstelle, also bei etwa 10 kHz unterhalb der Schwelle von -40 db, ab 100 kHz ergibt sich eine zusätzliche Dämpfung im Bereich von einzelnen db.

### Bezugszeichenliste

- 10: Stromrichter
- 11: Versorgungsnetz
- 12: Wandler-Einrichtung
- 13: Last
- 14: DC-Filter
- 16: Netzfilter
- 17: Phasenleitungen
- 19: Störsystem
- 21: Gleichtakttransformator
- 221...223: erste Wicklungen
- 24: zweite Wicklung
- 81: gemeinsamer magnetischer Kern
- 82, 83: Schenkel
- 26, 31, 41, 51, 61, 71: Dämpfungsschaltung
- 261, 32, 42, 52, 62, 64: Widerstand
- 262, 43, 53, 65, 72: Kondensator
- 33, 44, 54: Induktivität
- 101, 102: Pole des einphasigen Systems
- 124: Kondensator-System
- 125: Gleichtaktdrossel
- 91: magnetischer Kern
- 92: Mittelsteg

## Patentansprüche

1. Stromrichter (10), umfassend eine Wandler-Einrichtung (12) zur Wandlung zwischen einer ersten und einer zweiten elektrischen Spannung und eine Gleichtaktfilter-Vorrichtung (16), die einen Gleichtakt-Transformator (21) aufweist, wobei der Gleichtakt-Transformator (21) wenigstens zwei gleichsinnig auf einem gemeinsamen Kern (81, 91) angeordnete erste Wicklungen (221...223) aufweist, die seriell in mit der Wandler-Einrichtung (12) verbundene elektrische Leiter (17) geschaltet sind, wobei eine zweite Wicklung (24) auf dem gemeinsamen Kern (81, 91) angeordnet ist, die mit einer frequenzselektiven passiven Dämpfungsschaltung (26, 31, 41, 51, 61, 71) verbunden ist.

2. Stromrichter (10) nach Anspruch 1, bei dem die frequenzselektive passive Dämpfungsschaltung (26, 31, 41, 51, 61, 71) wenigstens einen Kondensator (262, 43, 53, 65, 72) und/oder wenigstens eine Induktivität (33, 44, 54) aufweist.

3. Stromrichter (10) nach Anspruch 1 oder 2, bei dem die frequenzselektive passive Dämpfungsschaltung (26, 31, 41, 51, 61, 71) im Strompfad zwischen den Anschlüssen der zweiten Wicklung (24) einen Widerstand (261, 32, 42, 52, 62, 64) aufweist.

4. Stromrichter (10) nach einem der vorangehenden Ansprüche, bei dem die Gleichtaktfilter-Vorrichtung (16) netzseitig von der Wandler-Einrichtung (12) angeordnet ist.

5. Stromrichter (10) nach einem der vorangehenden Ansprüche, bei dem die Gleichtaktfilter-Vorrichtung (16) eine Gleichtaktdrossel (125) aufweist.

6. Stromrichter (10) nach Anspruch 5, bei dem die Gleichtaktfilter-Vorrichtung (16) von den elektrischen Leitungen (17) zu einem Bezugspotential geschaltete Kondensatoren (124) aufweist, die zusammen mit der Gleichtaktdrossel (125) und dem Gleichtakttransformator (21) ein LCL-Filter bilden oder zusammen mit dem Gleichtakttransformator (21) ein LC-Filter bilden.

7. Stromrichter (10) nach einem der vorangehenden Ansprüche, bei dem der gemeinsame Kern (81, 91) ein ringförmiger Kern ist.

8. Stromrichter (10) nach einem der vorangehenden Ansprüche, bei dem der gemeinsame Kern (81, 91) einen Mittelsteg (92) mit einem Luftspalt aufweist

9. Stromrichter (10) nach einem der vorangehenden Ansprüche, bei dem die frequenzselektive passive Dämpfungsschaltung (26, 31, 41, 51, 61, 71) eine Serienschaltung mit einem Widerstand und einem Kondensator oder einem Widerstand (32) und einer Induktivität (33) aufweist.

10. Stromrichter (10) nach einem der vorangehenden Ansprüche, bei dem die frequenzselektive passive Dämpfungsschaltung (26, 31, 41, 51, 61, 71) eine Serienschaltung mit einem Widerstand (42) und einem Kondensator (43) und einer Induktivität (44) aufweist.

11. Stromrichter (10) nach einem der vorangehenden Ansprüche, bei dem die frequenzselektive passive Dämpfungsschaltung (26, 31, 41, 51, 61, 71) eine Parallelschaltung eines Widerstands (52), eines Kondensator (53) und einer Induktivität (54) aufweist.

12. Stromrichter (10) nach einem der vorangehenden Ansprüche, bei dem die frequenzselektive passive Dämpfungsschaltung (26, 31, 41, 51, 61, 71) eine Serienschaltung mit einem Widerstand (62) und einer Parallelschaltung eines Kondensators (65) mit einem Widerstand (64) aufweist.

13. Stromrichter (10) nach Anspruch 12, bei dem die frequenzselektive passive Dämpfungsschaltung (26, 31, 41, 51, 61, 71) zusätzlich einen in Serie geschalteten Kondensator (72) aufweist.

14. Stromrichter (10) nach einem der vorangehenden Ansprüche, bei dem die frequenzselektive passive Dämpfungsschaltung (26, 31, 41, 51, 61, 71) eine erste frequenzselektive Teilschaltung mit einer ersten Grenzfrequenz oder Resonanzfrequenz und eine parallel zur ersten Teilschaltung geschaltete zweite frequenzselektive Teilschaltung mit einer zweiten, von der ersten verschiedenen Grenzfrequenz oder Resonanzfrequenz aufweist.
